# EUROPÄISCHE PATENTSCHRIFT

(11) **EP 3 428 361 B1**
(45) Veröffentlichungstag und Bekanntmachung des Hinweises auf die Patenterteilung: **15.05.2019**
(21) Anmeldenummer: 18175791.5
(22) Anmeldetag: 04.06.2018
(51) Int. Cl.: E04C 2/10, B32B 21/00, F16B 15/00

(54) **VERBUNDBAUTEIL**
COMPOSITE COMPONENT
COMPOSANT COMPOSITE

(30) Priorität: 14.07.2017 DE 102017115893
(43) Veröffentlichungstag der Anmeldung: 16.01.2019
(73) Patentinhaber: Raimund Beck Nageltechnik GmbH, 5270 Mauerkirchen (AT)
(72) Erfinder: Siemers, Stefan, 84489 Burghausen (DE)
(74) Vertreter: Paul & Albrecht Patentanwälte PartG mbB

(56) Entgegenhaltungen:
- EP-A2- 1 321 598
- EP-A2- 2 316 624
- WO-A1-2016/180900
- WO-A2-2015/000747
- US-A1- 2006 060 263

## Beschreibung

Die vorliegende Erfindung betrifft ein Verbundbauteil, insbesondere ausgebildet als Wand-, Decken- oder Dachelement für den Hausbau und insbesondere für Fertighäuser, mit mehreren insbesondere länglichen Verbundbauteilelementen, die in übereinander liegenden Schichten nebeneinander liegend angeordnet sind, wobei die Verbundbauteilelemente einer Schicht mit den Verbundbauteilelementen wenigstens einer benachbarten Schicht überlappen, insbesondere die Verbundbauteilelemente einer Schicht jeweils mit zumindest zwei Verbundbauteilelementen einer benachbarten Schicht überlappen, und die Verbundbauteilelemente in ihren Überlappungsbereichen mittels Nägeln miteinander verbunden sind, wobei die Nägel (4) ohne Vorbohren in die Verbundbauteilelemente (2) eingeschossen sind.

Beim Bau von Gebäuden können je nach bauphysikalischen und/oder ästhetischen Anforderungen in an sich bekannter Weise die unterschiedlichsten Baumaterialien, wie etwa Ziegelsteine, Gasbetonsteine, Stahlbeton, Stahl-, Glas- und/oder Holzkonstruktionen, eingesetzt werden. Häuser aus Holz weisen ein besonders gutes Raumklima auf und benötigen in der Regel weniger Heizenergie verglichen mit klassischen Steinhäusern. In den letzten Jahren sind sogenannte Fertighäuser, deren Komponenten werksseitig vorgefertigt und auf einer Baustelle nur noch zusammen- beziehungsweise endmontiert werden, insbesondere aufgrund ihrer relativ kurzen Bauzeit immer beliebter geworden. Die Komponenten solcher Fertighäuser können je nach Bedarf sowohl in Massivbauweise, wie etwa aus Stahlbeton, als auch in Leichtbauweise, wie etwa aus Holz, gefertigt sein. Häufig handelt es sich bei den einzelnen Komponenten von Fertighäusern um Verbundbauteile, die mehrere miteinander verbundene Verbundbauteilelemente aus gleichen, ähnlichen oder verschiedenen Materialien umfassen. Beispielsweise kann das Verbundbauteil als Wand-, Decken- oder Dachelement eines Holzhauses ausgebildet sein, wobei die Verbundbauteilelemente aus Holz- oder holzähnlichen Werkstoffen hergestellt und mittels Nägeln miteinander verbunden sind, ohne die Verbundbauteilelemente vorbohren zu müssen.

Ein derartiges Verbundbauteil ist in der EP1321598B1 offenbart. Bei dem Verbundbauteil der EP1321598B1 bestehen die Nägel aus Aluminium, Messing, Kunststoff oder faserverstärktem Kunststoff. Diese Materialien sind verglichen mit den Holzmaterialien, aus denen ein Holzhaus hergestellt ist, nicht umweltfreundlich. Denn die Herstellung von Kunststoffen oder Aluminium ist energetisch aufwendig. Deshalb stößt ein Holzhaus, das viele Tausende solcher Aluminium-, Messing- oder Kunststoffnägel aufweist, bei umweltbewussten Hausherren nicht zuletzt aus ideologischen Gründen auf wenig Akzeptanz. Zudem muss bei der Entsorgung der Baustoffe nach einem Abriss eines Gebäudes das Aluminium, das Messing oder der Kunststoff vom Holz getrennt werden, was mit zum Teil erheblichem Aufwand verbunden ist. Des Weiteren stören beispielweise Kunststoffnägel das optische Gesamterscheinungsbild des Verbundbauteils und somit des Holzhauses.

Aus der WO 2015/000747 A2 ist ein Verbundbauteil aus Holz vorbekannt, welches aus mehreren übereinanderliegenden Brettern besteht, die an Ihren jeweiligen Oberflächen eine Profilierung aufweisen. Die Profilierung kann dabei Vor- und Rücksprünge beispielsweise in der Form von Schwalbenschwanzprofilen aufweisen, sodass jeweils die zu aufeinanderliegenden Schichten gehörenden Bretter formschlüssig miteinander verbunden sind. Ergänzend können die Bretter ferner durch Holzdübel oder Holzschrauben mit den jeweils äußeren Schichten des Verbundbauteils verbunden sein. Zwar können derartige Verbindungelemente aus Holz bestehen, allerdings erfordert der Einsatz von Holzdübeln oder Holzschrauben ein Vorbohren, welches mit einem hohen Bearbeitungsaufwand einhergeht.

Die WO 2016/180900 A1 offenbart einen Nagelstreifen aus verholztem Pflanzenmaterial zur Verwendung in einem Nagelsetzgerät.

Die EP 2 316 624 A2 offenbart ein Verbundbauteil mit mehreren Verbundbauteilelementen, die in übereinanderliegenden Schichten nebeneinanderliegend angeordnet sind, wobei die Verbundbaueilelemente einer Schicht mit den Verbundbauteilelementen wenigstens einer benachbarten Schicht überlappen und die Verbundbauteilelemente in ihren Überlappungsbereichen mittels Holzstiften, also Stiften aus Holz, miteinander verbunden sind. Zum Einbringen der Stifte ist es erforderlich, Vorbohrungen in das Verbundbauteil einzubringen, die zum Zwecke der Steigerung der strukturellen Stabilität der Verbundbauteile nicht senkrecht, sondern in unterschiedlichen, jedoch definierten Winkeln zur Orientierung der Verbundbauteilelemente ausgeführt sind. Wenngleich ein auf eine derartige Weise hergestelltes Verbundbauteil eine hohe mechanische Festigkeit aufweist, so wird zu teilen als nachteilig angesehen, dass aufgrund der Orientierung der eingebrachten Stifte schräg zur Oberfläche des Verbundbauteils ein direktes Eintreiben ohne Vorbohrung nicht möglich ist und deshalb sich die Herstellung eines derartigen Verbundbauteils sehr aufwändig gestaltet.

Häufig werden die zuvor erwähnten Verbundbauteile aus Kostengründen in größeren Stückzahlen mit einheitlichen Abmessungen auf Vorrat produziert und erfolgt nach dem Eingang eines Auftrags eine entsprechende Nachbearbeitung des vorgefertigten Verbundbauteils, um dieses an die individuellen Kundenwünsche anzupassen. So werden beispielsweise Fenster- und/oder Türöffnungen nachträglich in das Verbundbauteil gesägt. Hierbei müssen neben dem Holzmaterial der Verbundbauteilelemente oftmals auch einige der Nägel, die das vorproduzierte Verbundbauteil zusammen halten, durchtrennt werden. Die zu diesem Zweck verwendeten Werkzeuge, insbesondere Holzbearbeitungswerkzeuge, verschleißen bei Nägeln aus Aluminium-, Messing- oder Kunststoff relativ stark.

Vor diesem Hintergrund liegt der vorliegenden Erfindung die Aufgabe zugrunde, ein Verbundbauteil der eingangs genannten Art anzugeben, das auf einfache Weise herzustellen und umweltfreundlich und einfach nachzubearbeiten ist.

Diese Aufgabe ist erfindungsgemäß bei einem Verbundbauteil der eingangs genannten Art dadurch gelöst, dass die Nägel aus einem überwiegend lignocellulosischem Material bestehen.

Die Nägel können aus Holz und/oder einem Holzwerkstoff, insbesondere einem organisch gebundenen Holzwerkstoff, bevorzugt einem kunstharzgebundenen Schichtholz, beispielsweise Buchfurnierschichtholz, oder einem kunstharzgebundenen Faserverbundwerkstoff, der lignosecellulosische Fasern aus Einjahrespflanzen enthält, und/oder einem Verbundwerkstoff mit thermoplastischer oder duroplastischer Matrix und bio-basierten Fasern, bevorzugt Flachs-, Hanf-, Jute-, Kenaf-, Rayon- und Viskosefasern, hergestellt sein.

Vorteilhafterweise enthält der organisch gebundene Holzwerkstoff Phenolharz als Kunstharz. Insbesondere sollte der organisch gebundene Holzwerkstoff Kunstharz in einer Menge von wenigstens 30 Gew.-%, insbesondere wenigstens 35 Gew.-% enthalten, wobei der Kunstharzanteil bevorzugt 40 Gew.-% beträgt.

In bevorzugter Weise bestehen die Nägel aus einem Material mit einer Dichte > 0,65 g/cm³, insbesondere einer Dichte > 0,85 g/cm³ und bevorzugt einer Dichte > 1,0 g/cm³ bestehen, wobei die Dichte insbesondere 1,3 g/cm³ beträgt.

Damit können harte Hölzer als Material für die Nägel dienen. Zu den harten Hölzern gehören Laubhölzer mit Dichten ab 0,65 g/cm³, wie z.B. Rotbuche (Fagus sylvatica), Hainbuche (Carpinus betulus), Ahorn (Acer pseudoplatanus oder A. platanoides), bevorzugt Laubhölzer mit Dichten größer 0,85 g/cm³, wie z.B. Pernambuc (Caesalpinia echinata), Bangkirai (Shorea ssp.) oder einige Palisanderarten (Dalbergia ssp, Machaerium ssp), besonders bevorzugt Laubhölzer mit Dichten größer 1,0 g/cm³, wie z.B. Bongossi (Lophira alata) oder Pockholz (Guaiacum ssp.).

Zu geeigneten Holzwerkstoffen, die ohne Zusatz von Bindemitteln hergestellt werden, gehören verdichtete Hölzer mit Dichten größer 0,65 g/cm³, insbesondere mit Dichten größer 0,85 g/cm³ und bevorzugt mit Dichten größer 1,0 g/cm³. Zum Beispiel können die Nägel aus einem auf eine Dichte größer 0,8 g/cm³ verdichteten Kiefern- oder Lärchenholz bestehen. Diese verdichteten Hölzer können beispielsweise nach der WO94/20273 A hergestellt werden.

Zu geeigneten Holzwerkstoffen, die unter Zusatz von Bindemitteln hergestellt werden, gehören nicht verdichtete Furnierschichthölzer und Sperrhölzer aus Holzarten ausreichender Dichte (s.o.). Zu den kommerziell erhältlichen Furnierschichthölzern ausreichender Dichte gehört z.B. BauBuche von Pollmeier Massivholz GmbH & Co.KG, Creuzberg, mit einer Dichte von 0,68 g/cm³. Sperrhölzer mit gleich starken Furnierlagen, sogenannte Multiplexplatten, werden aus Buche oder Birke mit Dichten von ≥ 0,7 g/cm³ von verschiedenen Herstellern, wie z.B. UPM Plywood, Lahti, Finnland, angeboten. Zu den bevorzugten Holzwerkstoffen mit Bindemittelanteilen gehören verdichtete Furnierschichthölzer, Presslagenholz und Sperrhölzer, z.B. aus Buchenfurnier mittlerer bis hoher Verdichtung mit Dichten von 1,1 g/cm³ bis 1,4 g/cm³, wie z.B. Kunstharzpressholz nach DIN 7707.

Den Holzwerkstoffen strukturell sehr ähnlich sind verdichtete und verleimte Werkstoffe aus verholztem Pflanzenmaterial, z.B. aus Monokotylidonen, zu denen u.a. Gewebe aus Palmen- und Bambusgewächsen gehören. Verdichtete Bambusprodukte werden unter anderem unter der Bezeichnung CoBAM (compressed Bamboo) geführt. CoBAM weist Dichten von 0,95 bis 1,25 g/cm³ auf.

Die Verwendung von Nägeln aus einem überwiegend lignocellulosischem Material, wie etwa den zuvor beschriebenen Materialien, zum Verbinden der Verbundbauteilelemente ist insbesondere in ökologischer Hinsicht von Vorteil. Denn zum einen ist die Herstellung von Nägeln aus Holz oder holzähnlichen Materialien verglichen mit Nägeln aus Kunststoffen oder Aluminium energetisch weniger aufwendig. Zum anderen ist die Entsorgung von Nägeln aus Holz oder holzähnlichen Materialien vergleichsweise unproblematisch, da diese verglichen mit Aluminium und Kunststoff relativ schnell biologisch abbaubar sind. Wird ein Holzhaus mit Nägeln aus Holz abgerissen, können die Abrissprodukte unmittelbar einer Weiterverwertung zugeführt werden, ohne vorher Nägel oder Nagelreste aus den Abrissprodukten entfernen zu müssen.

Des Weiteren lässt sich ein erfindungsgemäßes Verbundbauteil mit Verbundbauteilelementen aus Holz, die mittels Nägeln aus Holz oder holzähnlichen Materialien verbunden sind, problemlos mittels Holzwerkzeugen nachbearbeiten, um beispielsweise nachträglich Fenster- und/oder Türöffnungen in das Verbundbauteil einzubringen.

Ferner sind Nägel aus Holz oder holzähnlichen Materialien im Gegensatz zu Nägeln aus Metall oder Kunststoff hygroskopisch und können quellen. Insbesondere verdichtetes Holz kann sehr hohe Quelldrücke von bis zu 10 N/mm² ausbilden, wobei für das erfindungsgemäße Verbundbauteil bevorzugt Nägel eingesetzt werden, die einen Quelldruck von 0,5 N/mm², bevorzugt von 1 N/mm² und besonders bevorzugt von 2 N/mm² entwickeln. Diese Eigenschaft ist von besonderer Bedeutung. Um die Auszugsfestigkeit zu erhöhen, werden Nägel aus Holz oder holzähnlichen Materialien vor der Nutzung auf Feuchtigkeiten getrocknet, die unterhalb der Feuchtigkeit der Verbundbauteilelemente liegt. Im Freien verbautes oder zu verbauendes Holz weist beispielsweise Feuchtigkeiten > 15% auf. Nägel aus Holz oder holzähnlichen Materialien sollten deshalb auf mindestens 5%, bevorzugt 10% und besonders bevorzugt auf 15% geringere Feuchtigkeit als die der Verbundbauteilelemente getrocknet werden. Nach dem Eindringen des Nagels nimmt der Nagel aus der Umgebung Feuchtigkeit auf, bis er seine Ausgleichsfeuchtigkeit erreicht hat, und quillt dabei. Durch die Quellung presst sich der Nagel stärker an das Umgebungmaterial, wodurch die Reibung und die Auszugsfestigkeit erhöht werden.

Beim Einschießen der Nägel in die (Holz-) Verbundbauteilelemente, insbesondere ausgehend von einer obersten Schicht des Verbundbauteils, wird durch die hohe Geschwindigkeit von > 30 m/s eine hohe Reibung zwischen der Oberfläche des Nagels und dem verdrängten Material der Verbundbauteilelemente erzeugt. Durch die Reibung wird Reibungshitze erzeugt. Da Holz verglichen mit beispielsweise Aluminium ein schlechter Wärmeleiter ist, werden dabei die Oberflächen des Nagels sowie des Schusskanals im umgebenden Material so stark erhitzt, dass es zu einem Verschweißen der Materialien des Nagels und der Verbundbauteilelemente kommt. Die eingeschossenen Nägel durchsetzen jeweils zumindest die oberste Schicht und dringen zumindest in eine darunter liegende Schicht ein. Grundsätzlich ist es auch möglich, dass die Nägel alle Schichten durchdringen bzw. darin eindringen.

Durch die Kombination von Reibschweißen und Quellen ist die Haftung eines Nagels aus Holz oder einem holzähnlichen Material im (Holz-) Untergrund so hoch, dass auf die Ausbildung eines über den Schaftdurchmesser hinausragenden Nagelkopfs verzichtet werden kann. Dies ist aus ästhetischen Gründen sehr willkommen und trägt zu einer kostengünstigeren Herstellung der Nägel bei.

Gemäß einer bevorzugten Ausgestaltung der Erfindung umfassen die Verbundbauteilelemente lignocellulosisches Material. Zur Vermeidung von Wiederholungen wird für Beispiele möglicher lignocellulosischer Materialien auf die vorstehende Beschreibung möglicher Materialien der Nägel verwiesen. Zweckmäßigerweise handelt es sich bei den Verbundbauteilelementen um Bretter, Latten, Platten, Pfosten oder Leisten aus Holz oder holzähnlichen Materialien. Es ist aber auch möglich, dass die Verbundbauteilelemente andere Materialien, wie etwa Gips oder Kunststoff, umfassen.

Die Verbundbauteilelemente können beispielsweise aus Vollholz oder einem organisch gebundenen Holzwerkstoff, wie etwa einer Vollholzsperrholzplatte, einer Furniersperrholzplatte, einer Spanplatte, einer Oriented Strand Board (OSB-) oder Grobspanplatte, einer Faserplatte (MDF), oder einem mineralisch gebundenen Span- oder Faserwerkstoff, wie etwa einer Gipskarton-, Gipsfaser-, Faserzement- oder Zementspanplatte, bestehen. Hierbei soll der Begriff Gips allgemein für Erdalkalisulfate und der Begriff Zement allgemein für Erdalkalicarbonate, wie Kalzium- oder Magnesiumcarbonat und ihre jeweiligen Hydrate verstanden werden.

Zweckmäßigerweise kreuzen sich die Verbundbauteilelemente der übereinander liegenden Schichten insbesondere rechtwinklig oder in einem Winkel ≥ 45° und sind die Verbundbauteilelemente an jedem Kreuzungspunkt miteinander vernagelt. Auf diese Weise lässt sich das Verbundbauteil besonders stabil konstruieren.

Die Verbundbauteilelemente innerhalb einer Schicht können die gleiche Dicke aufweisen. Jedoch können die Schichten unterschiedliche Dicken aufweisen, wobei es bei der Wahl der Schichtdicke unter anderen darauf ankommt, welche technische Funktion die jeweilige Schicht übernimmt. Eine Schicht mit größerer Dicke kann sich im Zentrum des Verbundbauteils befinden, wodurch sich eine verbesserte Stabilität des Verbundbauteils ergibt.

Vorteilhaft liegen die Verbundbauteilelemente einer Schicht mit ihren zueinander weisenden Stirnseiten aneinander an. Die Verbundbauteilelemente einer Schicht können über korrespondierende Eingriffsmittel, insbesondere Nuten und Federelemente, die an ihren zueinander weisenden Stirnseiten vorgesehen sind, ineinander greifen. Auf diese Weise wird das Verbundbauteil besser gegen das Eindringen von Regen oder Wind geschützt.

Die übereinander liegenden Schichten können gegeneinander Lufthohlräume einschließen. Diese Lufthohlräume können beispielsweise durch Rillen, die in die aufeinander liegenden Seiten der Verbundbauteilelemente eingebracht sind, oder durch eine raue Oberfläche der aufeinander liegenden Seiten der Verbundbauteilelemente entstehen. Da Luft eine geringere Wärmeleitfähigkeit als beispielsweise Holz hat, wirkt die in den Lufthohlräumen eingeschlossene Luft thermisch isolierend.

Vorteilhafterweise befindet sich zwischen zwei benachbarten Schichten eine funktionale Zwischenlage, insbesondere eine feuchtigkeitsdurchlässige oder feuchtigkeitsundurchlässige und winddichte Folie. Auf diese Weise kann sichergestellt werden, dass das Verbundbauteil, insbesondere wenn es als Wand-, Decken- oder Dachelement für den Hausbau ausgebildet ist, "atmungsaktiv" ist und sich kein Schimmel bilden kann.

In dem Verbundbauteil können Installationskanäle vorgesehen sein, in denen Leitungen, insbesondere Strom- oder Rohrleitungen installiert werden können.

Weitere Merkmale und Vorteile der vorliegenden Erfindung werden anhand der nachfolgenden Beschreibung von zwei Ausführungsformen eines Verbundbauteils gemäß der vorliegenden Erfindung unter Bezugnahme auf die beiliegende Zeichnung deutlich. Darin ist:
- Figur 1: eine schematische perspektivische Ansicht eines erfindungsgemäßen Verbundbauteils gemäß einer ersten Ausführungsform der vorliegenden Erfindung;
- Figur 2: eine Schnittansicht entlang der Schnittlinie II-II in Figur 1;
- Figur 3: eine Schnittansicht eines erfindungsgemäßen Verbundbauteils gemäß einer zweiten Ausführungsform der vorliegenden Erfindung; und
- Figur 4: eine schematische Ansicht eines Nagels der erfindungsgemäßen Verbundbauteile der Figuren 1 bis 3.

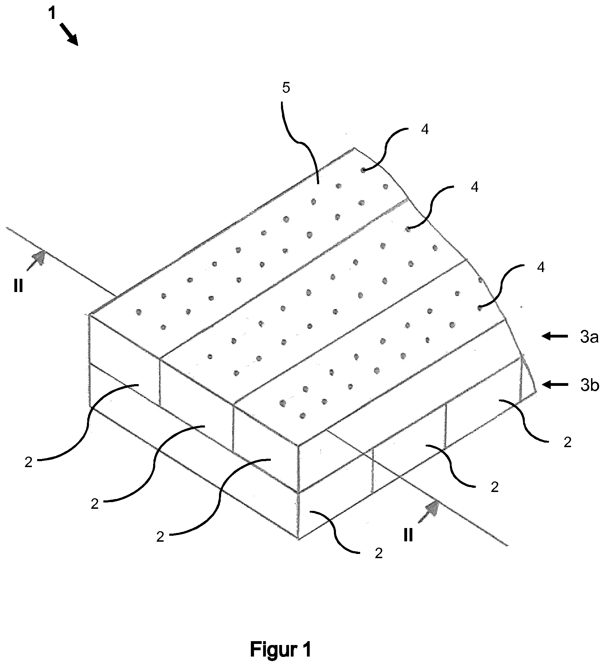

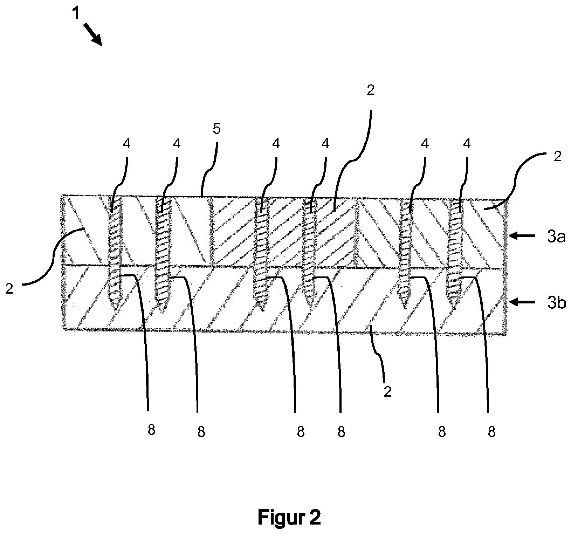

Die Figuren 1 und 2 zeigen schematische Ansichten eines Teilausschnitts eines erfindungsgemäßen Verbundbauteils 1 gemäß einer ersten Ausführungsform der vorliegenden Erfindung. Bei dem Verbundbauteil 1 handelt es sich um ein vorproduziertes Rohbauteil, aus dem durch Nachbearbeitung, insbesondere durch nachträgliches Einbringen von Fenster- und/oder Türöffnungen, ein Wandelement für ein Holzfertighaus entsteht. Das Verbundbauteil 1 umfasst mehrere Verbundbauteilelemente 2, die als längliche Holzbretter gleicher Dicke ausgebildet und in zwei übereinander liegenden Schichten 3a, 3b nebeneinander liegend angeordnet sind, wobei die Verbundbauteilelemente 2 jeder Schicht 3a, 3b mit ihren zueinander weisenden Stirnseiten aneinander anliegen. Die Verbundbauteilelemente 2 der unteren Schicht 3b überlappen jeweils mit drei Verbundbauteilelementen 2 der oberen Schicht 3a. Hierbei erstrecken sich die Verbundbauteilelemente 2 der oberen Schicht 3a in einer Längsrichtung des Verbundbauteils 1 und kreuzen sich rechtwinklig mit den Verbundbauteilelementen 2 der unteren Schicht 3b.

Erfindungsgemäß sind die Verbundbauteilelemente 2 in ihren Überlappungsbereichen mittels Nägeln 4 aus einem überwiegend lignocellulosischem Material miteinander verbunden. Hierfür wurden die Nägel 4 mit Hilfe eines Druckluftnagelgeräts von der Oberseite 5 der oberen Schicht 3a her ohne Vorbohren direkt in das Holz der Verbundbauteilelemente 2 eingeschossen, wobei die Nägel 4 die obere Schicht 3a des Verbundbauteils 1 vollständig durchsetzen und in die untere Schicht 3b eingreifen.

In dieser Ausführungsform handelt es sich bei den Verbundbauteilelementen 2 der oberen Schicht 3a um Lärchenholzfassadenbretter, die mit Nägeln 4 aus verdichtetem Lärchenholz mit einer Dichte größer 0,8 g/cm³ auf die Verbundbauteilelemente 2 der unteren Schicht 3b, bei denen es sich um Nadelholzbretter handelt, genagelt sind. Auf diese Weise ist das Verbundbauteil 1 verglichen mit Nägeln 4 aus Kunststoff oder Metall umweltfreundlich und einfach nachzubearbeiten. Selbstverständlich können die Nägel 4 in anderen Ausführungsformen auch aus einem beliebigen anderen überwiegend lignocellulosischen Material bestehen und können die Verbundbauteilelemente 2 aus einem anderen Material, insbesondere jedoch einem Holz- oder holzähnlichen Material, bestehen.

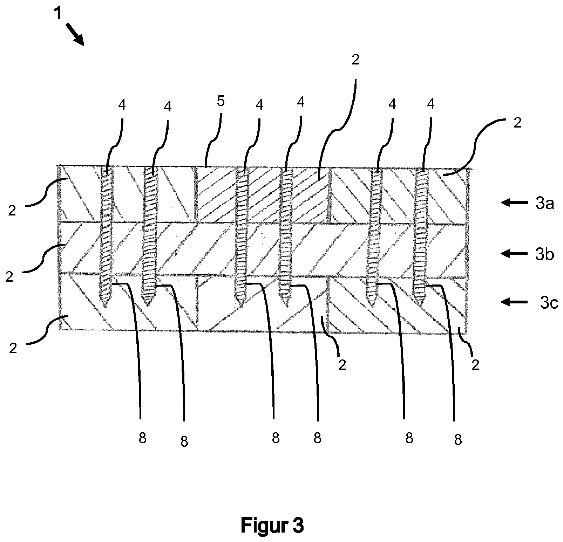

Die Figur 3 zeigt eine Schnittansicht eines erfindungsgemäßen Verbundbauteils 1 gemäß einer zweiten Ausführungsform der vorliegenden Erfindung. Die zweite Ausführungsform entspricht im Wesentlichen der ersten Ausführungsform und unterscheidet sich von dieser lediglich dadurch, dass das Verbundbauteil 1 gemäß der zweiten Ausführungsform drei zusätzliche Verbundbauteilelemente 2 umfasst, die in einer zusätzlichen Schicht 3c nebeneinander liegend angeordnet sind und sich wie die Verbundbauteilelemente 2 der obersten Schicht 3a in Längsrichtung des Verbundbauteils 1 erstrecken. Die zusätzliche Schicht 3c bildet die unterste Schicht 3c des Verbundbauteils 1. Bei den Verbundbauteilelementen 2 der mittleren und untersten Schicht 3b, 3c handelt es sich um Nadelholzbretter, während es sich bei der obersten Schicht 3a um Lärchenholzfassadenbretter handelt. Natürlich können die Bretter alternativ auch aus anderen Materialien bestehen. Die Nägel 4 durchsetzen sowohl die oberste Schicht 3a als auch die mittlere Schicht 3b und greifen in die unterste Schicht 3c des Verbundbauteils 1 ein.

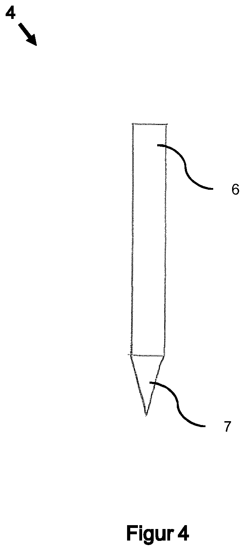

Die Figur 4 zeigt eine schematische Detailansicht eines Nagels 4 der zuvor beschriebenen Verbundbauteile 1. Die Nägel 4 des Verbundbauteils 1 umfassen jeweils einen Nagelschaft 6, an dessen vorderem Ende eine Nagelspitze 7 mit einem kreisrunden Querschnitt, d.h. eine kegelförmige Rundspitze, ausgebildet ist. Die Nägel 4 umfassen keinen Nagelkopf, der über den Schaftdurchmesser des Nagelschafts 6 hinausragt. Dies ist aufgrund der zuvor beschriebenen Materialien der Verbundbauteilelemente 2 und insbesondere der Nägel 4 möglich. Denn Nägel 4 aus Holz sind hygroskopisch und können nach dem Eintreiben der Nägel 4 in die Verbundbauteilelemente 2 unter Aufnahme von Feuchtigkeit aus der Umgebung quellen, wodurch sich eine erhöhte Reibung der Nägel 4 innerhalb der Einschusskanäle 8 der Verbundbauteilelemente 2 und somit eine erhöhte Auszugsfestigkeit der Nägel 4 ergibt. Zudem kommt es durch die beim Eintreiben der Nägel 4 in die Verbundbauteilelemente 2 erzeugte Reibungshitze zu einem Verschweißen der Materialien der Nägel 4 und der Verbundbauteilelemente 2, wodurch sich ebenfalls die Auszugsfestigkeit der Nägel 4 erhöht und auf Nagelköpfe verzichtet werden kann. Dennoch ist es in anderen Ausführungsformen möglich, dass Nägel 4 mit Köpfen verwendet werden.

### Bezugszeichenliste

- 1: Verbundbauteil
- 2: Verbundbauteilelement
- 3a: Schicht
- 3b: Schicht
- 3c: Schicht
- 4: Nagel
- 5: Oberseite
- 6: Nagelschaft
- 7: Nagelspitze
- 8: Einschusskanal

## Patentansprüche

1. Verbundbauteil (1), insbesondere ausgebildet als Wand-, Decken- oder Dachelement für den Hausbau und insbesondere für Fertighäuser, mit mehreren insbesondere länglichen Verbundbauteilelementen (2), die in übereinander liegenden Schichten (3a, 3b, 3c) nebeneinander liegend angeordnet sind, wobei die Verbundbauteilelemente (2) einer Schicht (3a, 3b, 3c) mit den Verbundbauteilelementen (2) wenigstens einer benachbarten Schicht (3a, 3b, 3c) überlappen, insbesondere die Verbundbauteilelemente (2) einer Schicht (3a, 3b, 3c) jeweils mit zumindest zwei Verbundbauteilelementen (2) einer benachbarten Schicht (3a, 3b, 3c) überlappen, und die Verbundbauteilelemente (2) in ihren Überlappungsbereichen mittels Nägeln (4) miteinander verbunden sind, wobei die Nägel (4) ohne Vorbohren in die Verbundbauteilelemente (2) eingeschossen sind, **dadurch gekennzeichnet, dass** die Nägel (4) aus einem überwiegend lignocellulosischem Material bestehen.

2. Verbundbauteil (1) nach Anspruch 1, **dadurch gekennzeichnet, dass** die Nägel (4) aus Holz und/oder einem Holzwerkstoff, insbesondere einem organisch gebundenen Holzwerkstoff, bevorzugt einem kunstharzgebundenen Schichtholz oder einem kunstharzgebundenen Faserverbundwerkstoff, der lignosecellulosische Fasern aus Einjahrespflanzen enthält, und/oder einem Verbundwerkstoff mit thermoplastischer oder duroplastischer Matrix und bio-basierten Fasern, bevorzugt Flachs-, Hanf-, Jute-, Kenaf-, Rayon- und Viskosefasern, hergestellt sind.

3. Verbundbauteil (1) nach Anspruch 2, **dadurch gekennzeichnet, dass** der organisch gebundene Holzwerkstoff Phenolharz als Kunstharz enthält.

4. Verbundbauteil (1) nach Anspruch 2 oder 3, **dadurch gekennzeichnet, dass** der organisch gebundene Holzwerkstoff Kunstharz in einer Menge von wenigstens 30 Gew.-%, insbesondere wenigstens 35 Gew.-% enthält, wobei der Kunstharzanteil bevorzugt 40 Gew.-% beträgt.

5. Verbundbauteil (1) nach einem der vorhergehenden Ansprüche, **dadurch gekennzeichnet, dass** die Nägel (4) aus einem Material mit einer Dichte > 0,65 g/cm³, insbesondere einer Dichte > 0,85 g/cm³ und bevorzugt einer Dichte > 1,0 g/cm³ bestehen, wobei die Dichte insbesondere 1,3 g/cm³ beträgt.

6. Verbundbauteil (1) nach einem der vorhergehenden Ansprüche, **dadurch gekennzeichnet, dass** die Nägel (4) aus verdichtetem Material bestehen und einen Quelldruck von 0,5 N/mm², bevorzugt von 1 N/mm² und besonders bevorzugt von 2 N/mm² entwickeln.

7. Verbundbauteil (1) nach einem der vorhergehenden Ansprüche, **dadurch gekennzeichnet, dass** die Verbundbauteilelemente (2) lignocellulosisches Material, wie etwa Holz, und/oder Gips umfassen.

8. Verbundbauteil (1) nach Anspruch 7, **dadurch gekennzeichnet, dass** die Verbundbauteilelemente (2) aus Vollholz oder einem organisch gebundenen Holzwerkstoff, wie etwa einer Vollholzsperrholzplatte, einer Furniersperrholzplatte, einer Spanplatte, einer Oriented Strand Board (OSB-) oder Grobspanplatte, einer Faserplatte (MDF), oder einem mineralisch gebundenen Span- oder Faserwerkstoff, wie etwa einer Gipskarton-, Gipsfaser-, Faserzement- oder Zementspanplatte, bestehen.

9. Verbundbauteil (1) nach einem der vorhergehenden Ansprüche, **dadurch gekennzeichnet, dass** sich die Verbundbauteilelemente (2) der übereinander liegenden Schichten (3a, 3b, 3c) insbesondere rechtwinklig oder in einem Winkel ≥ 45° kreuzen und dass die Verbundbauteilelemente (2) an jedem Kreuzungspunkt miteinander vernagelt sind.

10. Verbundbauteil (1) nach einem der vorhergehenden Ansprüche, **dadurch gekennzeichnet, dass** die Verbundbauteilelemente (2) innerhalb einer Schicht (3a, 3b, 3c) die gleiche Dicke aufweisen.

11. Verbundbauteil (1) nach einem der vorhergehenden Ansprüche, **dadurch gekennzeichnet, dass** die Schichten (3a, 3b, 3c) unterschiedliche Dicken aufweisen, wobei sich insbesondere eine Schicht (3a, 3b, 3c) mit größerer Dicke im Zentrum des Verbundbauteils (2) befindet.

12. Verbundbauteil (1) nach einem der vorhergehenden Ansprüche, **dadurch gekennzeichnet, dass** die Verbundbauteilelemente (2) einer Schicht (3a, 3b, 3c) mit ihren zueinander weisenden Stirnseiten aneinander anliegen, und/oder, dass die Verbundbauteilelemente (2) einer Schicht (3a, 3b, 3c) über korrespondierende Eingriffsmittel, insbesondere Nuten und Federelemente, die an ihren zueinander weisenden Stirnseiten vorgesehen sind, ineinander greifen.

13. Verbundbauteil (1) nach einem der vorhergehenden Ansprüche, **dadurch gekennzeichnet, dass** die übereinander liegenden Schichten (3a, 3b, 3c) gegeneinander Lufthohlräume einschließen.

14. Verbundbauteil (1) nach einem der vorhergehenden Ansprüche, **dadurch gekennzeichnet, dass** sich zwischen zwei benachbarten Schichten (3a, 3b, 3c) eine funktionale Zwischenlage, insbesondere eine feuchtigkeitsdurchlässige oder feuchtigkeitsundurchlässige und winddichte Folie, befindet.

15. Verbundbauteil (1) nach einem der vorhergehenden Ansprüche, **dadurch gekennzeichnet, dass** in dem Verbundbauteil (1) Installationskanäle vorgesehen sind.

## Claims

1. Composite construction part (1), in particular designed as a wall, ceiling or roof element for house construction and in particular for prefabricated houses, having a plurality of, in particular elongate, composite construction part elements (2) which are arranged next to one another in superimposed layers (3a, 3b, 3c), the composite construction part elements (2) of one layer (3a, 3b, 3c) overlapping with the composite construction part elements (2) of at least one adjacent layer (3a, 3b, 3c), in particular the composite construction part elements (2) of a layer (3a, 3b, 3c) each overlap with at least two composite construction part elements (2) of an adjacent layer (3a, 3b, 3c), and the composite construction part elements (2) being connected to one another in their overlapping regions by means of nails (4), the nails (4) being shot into the composite construction part elements (2) without pre-drilling, **characterized in that** the nails (4) consist of a predominantly lignocellulosic material.

2. Composite construction part (1) according to claim 1, **characterized in that** the nails (4) are produced from wood and/or a wood material, in particular an organically bound wood material, preferably a synthetic resin-bonded laminated wood or a synthetic resin-bonded fibre composite material which contains lignosecellulose fibres from annual plants, and/or a composite material with a thermoplastic or thermosetting matrix and bio-based fibres, preferably flax, hemp, jute, kenaf, rayon and viscose fibres.

3. Composite construction part (1) according to claim 2, **characterized in that** the organically bound wood material contains phenolic resin as synthetic resin.

4. Composite construction part (1) according to claim 2 or 3, **characterized in that** the organically bound wood material contains synthetic resin in an amount of at least 30% by weight, in particular at least 35% by weight, the proportion of synthetic resin preferably being 40% by weight.

5. Composite construction part (1) according to one of the preceding claims, **characterized in that** the nails (4) consist of a material having a density > 0.65 g/cm³, in particular a density > 0.85 g/cm³ and preferably a density > 1.0 g/cm³, the density in particular being 1.3 g/cm³.

6. Composite construction part (1) according to one of the preceding claims, **characterized in that** the nails (4) consist of compacted material and develop a swelling pressure of 0.5 N/mm², preferably of 1 N/mm² and particularly preferably of 2 N/mm².

7. Composite construction part (1) according to one of the preceding claims, **characterized in that** the composite construction part elements (2) comprise lignocellulosic material, such as wood, and/or gypsum.

8. Composite construction part (1) according to claim 7, **characterized in that** the composite construction part elements (2) consist of solid wood or an organically bonded wood material, such as a solid wood plywood board, a veneer plywood board, a chipboard, an Oriented Strand Board (OSB-) or coarse chipboard, a fibreboard (MDF), or a mineralally bonded chip or fibre material, such as a gypsum plasterboard, gypsum fibreboard, fibre cement board or cement chipboard.

9. Composite construction part (1) according to one of the preceding claims, **characterized in that** the composite construction part elements (2) of the superimposed layers (3a, 3b, 3c) cross one another, in particular at right angles or at an angle ≥ 45°, and **in that** the composite construction part elements (2) are nailed to one another at each crossing point.

10. Composite construction part (1) according to one of the preceding claims, **characterized in that** the composite construction part elements (2) have the same thickness within a layer (3a, 3b, 3c).

11. Composite construction part (1) according to one of the preceding claims, **characterized in that** the layers (3a, 3b, 3c) have different thicknesses, in particular a layer (3a, 3b, 3c) of greater thickness being located in the centre of the composite construction part (2).

12. Composite construction part (1) according to one of the preceding claims, **characterized in that** the composite construction part elements (2) of a layer (3a, 3b, 3c) bear against one another with their mutually facing end faces, and/or **in that** the composite construction part elements (2) of a layer (3a, 3b, 3c) engage in one another via corresponding engagement means, in particular groove and tongue elements, which are provided on their mutually facing end faces.

13. Composite construction part (1) according to one of the preceding claims, **characterized in that** the superimposed layers (3a, 3b, 3c) enclose air cavities against one another.

14. Composite construction part (1) according to one of the preceding claims, **characterized in that** a functional intermediate layer, in particular a moisture-permeable or moisture-impermeable and windproof film is provided between two adjacent layers (3a, 3b, 3c).

15. Composite construction part (1) according to one of the preceding claims, **characterized in that** installation ducts are provided in the composite construction part (1).

## Revendications

1. Pièce de construction composite (1), en particulier conçue comme pièce de paroi, de plafond ou de toit pour la construction de maisons et en particulier de maisons préfabriquées, comportant plusieurs éléments de pièce de construction composite (2), en particulier allongés, qui sont disposés les uns à côté des autres en couches superposées (3a, 3b, 3c), les éléments de pièce de construction composite (2) d'une couche (3a, 3b, 3c) se recouvrant avec les éléments de pièce de construction composite (2) d'au moins une couche adjacente (3a, 3b, 3c), et se recouvrant avec ceux-ci, en particulier les éléments de pièce de construction composite (2) d'une couche (3a, 3b, 3c) chevauchent chacun au moins deux éléments de pièce de construction composite (2) d'une couche adjacente (3a, 3b, 3c) et les éléments de pièce de construction composite (2) étant reliés entre eux dans leurs zones de chevauchement au moyen de clous (4), les clous (4) étant enfoncés sans préperçage dans les éléments de pièce de construction composite (2), **caractérisé en ce que** les clous (4) sont constitués essentiellement en matériau lignocellulosique.

2. Pièce de construction composite (1) selon la revendication 1, **caractérisé en ce que** les clous (4) sont fabriqués à partir de bois et/ou d'un matériau en bois, en particulier d'un matériau en bois lié organiquement, de préférence un bois stratifié lié par une résine synthétique ou un matériau composite en fibres liées par une résine synthétique qui contient des fibres lignosecellulose provenant de plantes annuelles, et/ou un matériau composite avec une matrice thermoplastique ou thermodurcissable et des fibres biologiques, de préférence du lin, chanvre, jute, kenaf, rayon et viscose.

3. Pièce de construction composite (1) selon la revendication 2, **caractérisé en ce que** le matériau en bois lié organiquement contient une résine phénolique comme résine synthétique.

4. Pièce de construction composite (1) selon la revendication 2 ou 3, **caractérisé en ce que** le matériau en bois lié organiquement contient une résine synthétique en une quantité d'au moins 30% en poids, en particulier au moins 35% en poids, la proportion de résine synthétique étant de préférence de 40% en poids.

5. Pièce de construction composite (1) selon l'une des revendications précédentes, **caractérisé en ce que** les clous (4) sont constitués d'un matériau ayant une densité > 0,65 g/cm³, notamment une densité > 0,85 g/cm³ et de préférence une densité > 1,0 g/cm³, la densité étant notamment de 1,3 g/cm³.

6. Pièce de construction composite (1) selon l'une des revendications précédentes, **caractérisé en ce que** les clous (4) sont constitués d'un matériau compacté et développent une pression de gonflement de 0,5 N/mm², de préférence de 1 N/mm² et surtout de 2 N/mm².

7. Pièce de construction composite (1) selon l'une des revendications précédentes, **caractérisé en ce que** les éléments de pièce de construction composite (2) comprennent un matériau lignocellulosique, tel que du bois et/ou du gypse.

8. Pièce de construction composite (1) selon la revendication 7, **caractérisé en ce que** les éléments de pièce de construction composite (2) sont constitués de bois massif ou d'un matériau à base de bois lié organiquement, tel qu'un panneau de contreplaqué de bois massif, un panneau de contreplaqué de placage, un panneau de particules, un panneau à copeaux orientés (OSB-) ou un panneau de particules grossières, un panneau de fibres (MDF) ou un matériau en particules ou fibre lié minérallement, tel qu'un panneau de placoplâtre, une plaque en fibres de plâtre, une plaque en fibrociment ou en particules de ciment.

9. Pièce de construction composite (1) selon l'une des revendications précédentes, **caractérisé en ce que** les éléments de pièce de construction composite (2) des couches superposées (3a, 3b, 3c) se croisent, en particulier à angle droit ou selon un angle ≥ 45°, et **en ce que** les éléments de pièce de construction composite (2) sont cloués les uns sur les autres à chaque point de passage.

10. Pièce de construction composite (1) selon l'une des revendications précédentes, **caractérisé en ce que** les éléments de pièce de construction composite (2) ont la même épaisseur dans une couche (3a, 3b, 3c).

11. Pièce de construction composite (1) selon l'une des revendications précédentes, **caractérisé en ce que** les couches (3a, 3b, 3c) ont des épaisseurs différentes, en particulier une couche (3a, 3b, 3c) d'épaisseur supérieure étant située au centre de la pièce composite (2).

12. Pièce de construction composite (1) selon l'une des revendications précédentes, **caractérisé en ce que** les éléments de pièce de construction composite (2) d'une couche (3a, 3b, 3c) s'appuient les uns contre les autres avec leurs faces frontales mutuellement orientées, et/ou **en ce que** les éléments de pièce de construction composite (2) d'une couche (3a, 3b, 3c) sont en prise les uns avec les autres à l'aide de moyens correspondants, en particulier des rainures et des languettes qui sont disposés sur leurs faces frontales mutuellement orientées.

13. Pièce de construction composite (1) selon l'une des revendications précédentes, **caractérisé en ce que** les couches superposées (3a, 3b, 3c) renferment des cavités d'air les unes contre les autres.

14. Pièce de construction composite (1) selon l'une des revendications précédentes, **caractérisé en ce qu'**une couche intermédiaire fonctionnelle, en particulier un film perméable à l'humidité ou imperméable à l'humidité et résistant au vent se trouve entre deux couches adjacentes (3a, 3b, 3c).

15. Pièce de construction composite (1) selon l'une des revendications précédentes, **caractérisé en ce que** des conduits d'installation sont prévus dans la pièce composite (1).
